(19) Europäisches Patentamt
European Patent Office
Office européen des brevets

(11) Veröffentlichungsnummer: **0 005 200**
**B1**

(12) **EUROPÄISCHE PATENTSCHRIFT**

(45) Veröffentlichungstag der Patentschrift: **15.04.81**

(51) Int. Cl.³: **G 03 C 1/04**, C 08 L 33/14

(21) Anmeldenummer: **79101149.7**

(22) Anmeldetag: **17.04.79**

(54) **Photographisches Silberhalogenidmaterial und Verfahren zur Herstellung.**

(30) Priorität: **27.04.78 DE 2818678**

(43) Veröffentlichungstag der Anmeldung: **14.11.79 (Patentblatt 79/23)**

(45) Bekanntmachung des Hinweises auf die Patenterteilung: **15.04.81 Patentblatt 81/15**

(84) Benannte Vertragsstaaten: **BE DE FR GB**

(56) Entgegenhaltungen:
**DE - A - 1 904 147**
**DE - A - 1 904 149**
**DE - A - 2 445 611**
**FR - A - 2 072 600**
**FR - A - 2 110 037**
**FR - A - 2 111 876**
**GB - A - 942 93**
**GB - A - 942 932**
**US - A - 3 860 428**
**US - A - 3 936 401**

(73) Patentinhaber: **AGFA-GEVAERT Aktiengesellschaft Patentabteilung**
**D-5090 Leverkusen 1 (DE)**

(72) Erfinder: **Helling, Günter, Dr.**
**Waldstrasse 67**
**D-5200 Siegburg (DE)**
Erfinder: **Saleck, Wilhelm, Dr.**
**Im Birkelshof 3**
**D-5060 Bergisch-Gladbach (DE)**
Erfinder: **Bergthaller, Peter, Dr.**
**Morgengraben 1**
**D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

EP 0 005 200 B1

## Photographisches Silberhalogenidmaterial und Verfahren zur Herstellung

Die vorliegende Erfindung betrifft ein photographisches Material mit mindestens einer Silberhalogenidemulsion mit erhöhter Empfindlichkeit, die neuartige Polymere als empfindlichkeitssteigernde Zusätze enthält und ein Verfahren zu dessen Herstellung.

Die Lichtempfindlichkeit einer photographischen Silberhalogenidemulsion läßt sich auf zweierlei Weise beeinflussen. Zunächst kann man durch geeignete Wahl der physikalischen Bedingungen während der Fällung und der sogenannten physikalischen Reifung des Silberhalogenids eine Steigerung der Empfindlichkeit erreichen.

In der Praxis sind dieser Möglichkeit jedoch dadurch Grenzen gesetzt, daß mit der Erhöhung der Empfindlichkeit eine Vergrößerung des Silberhalogenidkornes parallel geht, durch die die Qualität des endgültigen Bildes nachteilig beeinflußt wird. Gewünscht sind aber Silberhalogenidemulsionen mit möglichst hoher Empfindlichkeit bei kleinem Korn.

Es ist ferner möglich, die Empfindlichkeit der photographischen Emulsionen auf chemischem Wege zu erhöhen durch Zusatz von chemischen Verbindungen, die im allgemeinen als chemische Sensibilisatoren bezeichnet werden.

Im Prinzip können solche Verbindungen in jedem Stadium der Herstellung der Emulsion zugefügt werden, z.B. vor der chemischen Reifung als Reifzusätze oder nach der chemischen Reifung zu der fertigen Gießlösung. Als Reifzusätze sind z.B. Edelmetallsalze, insbesondere Goldsalze, und Schwefelverbindungen wie Thiosulfate oder organische insbesondere heterocyclische Schwefelverbindungen geeignet. Nachteilig bei der chemischen Sensibilisierung ist, daß mit der Erhöhung der Empfindlichkeit zugleich eine verstärkte Neigung der Emulsion zu beobachten ist, einen entwickelbaren uniformen Schleier zu bilden. Aus diesem Grunde können hochwirksame chemische Sensibilisatoren, wie Verbindungen mit Oniumstruktur, z.B. quaternäre Ammonium-Phosphonium- oder ternäre Sulfoniumsalze, ferner Polyalkylen-oxyde und Polyalkylenoxydderivate, nur nach der chemischen Reifung zu der fertigen Gießlösung zugefügt werden. Bei einem Zusatz der Substanzen vor der chemischen Reifung würden die photographischen Silberhalogenidemulsionen so stark verschleiert werden, daß sie praktisch nicht mehr brauchbar sind.

Es ist weiterhin möglich, empfindlichkeitssteigernde Zusätze bereits während der Fällung des Silberhalogenids zuzusetzen oder die Fällung in Gegenwart derartiger Zusätze durchzuführen. Die meisten chemischen Sensibilisatoren kommen jedoch hierfür aus den obengenannten Gründen nicht infrage, da sie entweder nicht genügend sensibilisieren oder eine zu hohen Schleier bewirken.

Die Fällung des Silberhalogenids wird im allgemeinen unter Verwendung von Gelatine durchgeführt, die sich wegen ihrer guten Dispergier- und Schutzkolloideigenschaften für diesen Zweck als besonders brauchbares Peptisationsmittel erwiesen hat. Gelatine wirkt weiterhin als Halogenakzeptor beim photographischen Prozess und besitzt eine ausgezeichnete Gelbildungseigenschaft und weitere vorteilhafte Eigenschaften, die sie zum bevorzugten Peptisationsmittel für photographische Silberhalogenidemulsionen haben werden lassen.

Es ist jedoch schwierig, Gelatine in gleichbleibender Qualität und mit konstanten physikalischen und photographischen Eigenschaften herzustellen. Die meisten dieser Eigenschaften werden durch bakterielle Zersetzung während der Lagerung oder durch Hydrolyse während der Aufbereitung verschlechtert. Darüberhinaus enthält Gelatine als natürlich vorkommendes Material abhängig von ihrer Provenienz wechselnde Mengen der verschiedensten Begleitstoffe, die sich zum Teil vorteilhaft, zum Teil nachteilig auswirken können, und unterliegt Dimensions-änderungen bei variierenden Temperatur- und Feuchtigkeits-bedingungen.

Da die photographischen Eigenschaften einer Silberhalogenidemulsion wesentlich von den Fällungsbedingungen bestimmt werden, hat es nicht an Versuchen gefehlt, die Gelatine durch andere geeignete Peptisationsmittel, insbesondere durch halbsynthetische oder vollsynthetische Stoffe, z.B. künstliche polymere, zu ersetzen. Jedoch konnten hierdurch insgesamt keine wesentlichen Verbesserungen erreicht werden. So weist beispielsweise phthalierte Gelatine (US-A-2 614 928) ähnliche Nachteile auf wie die Gelatine selbst. Polyvinylpyrrolidon und Polyvinylalkohol sind zwar als Schutzkolloid geeignet, sie behindern aber in erheblichem Maße das Kornwachstum. Weiterhin sind Copolymerisate von Acrylamid und dessen Derivaten als Peptisationsmittel vorgeschlagen worden (US-A-2 811 494).

In der britischen Patentschrift 1 485 057 werden Polymerisate aus copolymerisierten Vinylsulfid-Monomeren und anderen olefinisch ungesättigten Monomeren beschrieben. Die Copolymerisate enthalten Thiagruppen in der Seitenkette. In der britischen Patentschrift 1 365 489 wird ein Verfahren zur Emulsionsherstellung beschrieben, bei dem als Peptisationsmittel ein Polymeres aus Vinylmonomeren mit divalenten Schwefelatomen und aus Alkylacrylat bzw. Alkylmethacrylat verwendet wird. Nachteilig an diesen Thiagruppen enthaltenden Polymeren ist vor allem, daß sie entweder nur nach komplizierten Herstellungsverfahren mit z.T. toxischen Ausgangsverbindungen erhalten werden oder daß sie — insbesondere gegenüber Silberionen — instabil sind.

Aus der GB-A-942 932 ist bekannt, die Empfindlichkeit photographischer Emulsionen mit Hilfe bestimmter Thioether zu erhöhen. Diese Thioether werden gemäß Seite 10, Z. 82 der fertigen Emulsion, z.B. unmittelbar vor dem Auftrag auf einen Träger, zugesetzt.

Es besteht also weiterhin ein Bedarf an synthetischen Materialien, die eine ähnlich gute Schutzkolloidwirkung wie Gelatine aufweisen, die stabil sind gegenüber den während der Emulsionsherstellung notwendigerweise auftretenden pH-Wert-Änderungen, und die mit Gelatine verträglich sind. Bei den meisten beschriebenen synthetischen Polymerisaten werden zwar bestimmte mechanische Eigenschaften wie beispielsweise Maßhaltigkeit und Quellverhalten verbessert, jedoch geht dies im allgemeinen zu Lasten des Empfindlichkeits-Körnigkeitsverhältnisses der photographischen Materialien. Darüberhinaus sind für einige der hierfür vorgeschlagenen Polymere die entsprechenden Monomeren nur nach umständlichen mehrstufigen Herstellungsverfahren erhältlich.

Der Erfindung liet die Aufgabe zugrunde, ein preiswert und einfach herzustellendes Bindemittel für photographische Silberhalogenidemulsionen anzugeben, das sich als Peptisationsmittel eignet und daher die Gelatine während der Fällung teilweise oder vollständig zu ersetzen vermag und die Nachteile der bekannten Peptisationsmittel vermeidet. Durch das neuartige Peptisationsmittel soll die Empfindlichkeit der photographischen Silberhalogenidemulsionen gesteigert werden, ohne das Korn wesentlich zu vergröbern. Weiterhin soll die Anentwickelbarkeit der Emulsion und die Deckkraft des bei der Entwicklung gebildeten Silbers verbessert werden.

Gegenstand der Erfindung ist ein lichtempfindliches photographisches Material mit mindestens einer Silberhalogenidemulsionsschicht, gekennzeichnet durch den Gehalt an einem Polymerisat aus wenigstens einer Verbindung A mit wenigstens einer Verbindung B, wobei A bzw. B folgender Formel entsprechen :

A :

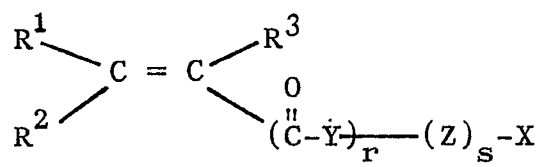

B :

$$H-S_n-(Q^1-W)_m-Q^2-S-H$$

worin bedeuten :

| | |
|---|---|
| $R^1$, $R^1$, $R^3$ | gleich oder verschieden ; Wasserstoff, ggfs. substituiertes Alkyl, insbesondere mit 1 – 4 C-Atomen, ggfs. substituiertes Aryl ; |
| Y | Sauerstoff oder $—NR^4—$ ; |
| $R^4$ | H, Alkyl, insbesondere mit 1 – 4 C-Atomen ; |
| Z | gegebenenfalls substituiertes Alkylen, insbesondere mit 1 – 4 C-Atomen oder ein ggfs. substituiertes Arylen, insbesondere Phenylen ; |
| X | $NR^1R^2$, H, OH, $SO_3H$, $PO_3H$, COOH oder ein Heterocyclus ; |
| $Q^1$, $Q^2$ | gleich oder verschieden, eine gegebenenfalls insbesondere mit X substituierte Alkylen- oder Arylengruppe oder einen heterocyclischen Rest. |
| W | Sauerstoff oder Schwefel ; |
| n, m, r, s | gleich oder verschieden, 0 oder 1. |

Als Substituenten der Verbindungen gemäß Formel A und B kommen die üblichen Substituenten in Frage, beispielsweise Hydroxy-, Carboxy- und Amin-Gruppen.

Als Verbindung A kommen in erster Linie wasserlösliche Verbindungen in Betracht, z.B. polymerisierbare Verbindungen mit Carbonsäure-, Sulfonsäure- oder Phosphonsäuregruppen. Besonders bevorzugte Verbindungen der Formel A sind solche, in denen bedeuten :

| | |
|---|---|
| $R^1$ und $R^2$ | H, |
| $R^3$ | H oder Methyl, |
| X | $SO_3H$, COOH, $CONH_2$ oder einen 5- oder 6-gliedrigen N-haltigen Heterocyclus, insbesondere 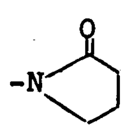 |
| und/oder | |
| X | Wasserstoff, wenn s = 0 |

Als Comonomere (A) sind beispielsweise geeignet :

Acrylsäure, Methacrylsäure, Vinylsulfonsäure, Styrolsulfonsäure, Allylsulfonsäure, Methallylsulfonsäure, 2-Acrylamido-2-methyl-propansulfonsäure, Methacrylamidobenzolsulfonsäure, Acrylamidobenzolsulfonsäure, Sulfopropylmethacrylat, Sulfoäthylmethacrylat, Sulfoäthylacrylat, Sulfopropylacrylat, Acrylamidoglykolsäure und Salze der genannten Säuren, ferner Hydroxyäthylmethacrylat, Hydroxyäthylacrylat, Hydroxypropylmethacrylat, Hydroxylpropylacrylat, Vinylpyridin, Acrylamid, Methacrylamid, N-Vinylpyrrolidon, N-Vinylimidazol, Dimethylaminoäthylmethacrylat, N,N-Diäthylaminoäthylmethacrylat oder die entsprechenden Quartärsalze der basischen Monomeren.

Bevorzugte Verbindungen gemäß Formel B entsprechen folgenden Formeln :

1)

$$HS-R^5-X$$

mit

$R^5$ gegebenenfalls zusätzlich substituiertes Alkylen, insbesondere mit 1 bis 4 C-Atomen oder gegebenenfalls zusätzlich substituiertes Arylen, insbesondere Phenylen

und worin X die unter Verbindung A angegebenen Bedeutungen hat

oder

2)

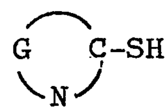

worin bedeutet :

G die zur Vervollständigung eines vorzugsweise 5-oder 6-gliedrigen Ringes erforderlichen Glieder, insbesondere zur Vervollständigung eines Oxazol-, Imidazol-, Pyrrol-, Tetrazol-, Thiazol-, Pyridin-, Pyrimidin- oder Pyrazol-Ringes, wobei der heterocyclische Ring ferner einen ankondensierten aromatischen Ring, insbesondere einen Benzoring, tragen kann, der gegebenenfalls substituiert ist

oder

3)

$$HS-(Q^1-W)_m-Q^2-SH$$

worin bedeutet :

$Q^1$ und $Q^2$ Äthylen, wenn m = 1 und $Q^2$ Alkylen oder ein Heterocylischer Rest, wenn m = 0.

Als erfindungsgemäß zu verwendende Mercaptane (B) sind Verbindungen geeignet wie z.B. 2-Marcaptoäthylamin, N-(2-Mercaptoäthyl)-cyclohexylamin, (2-Mercaptoäthyl)-trimethylammoniumbromid oder das entsprechende Acetat, 2-Mercaptoanilin, 3-Mercaptoanilin, 4-Mercaptoanilin, Mercaptoanisol, 2-Mercaptobenzimidazol, 2-Mercaptobenzolsäure, 2-Mercaptobenzothiazol, 2-Mercaptobenzoxazol, 2-Mercapto-4-(3H)-chinazolinon, 2-Mercaptochinolin, Mercaptoessigsäure, Mercaptoessigsäureäthylester, Mercaptoessigsäuremethylester, 2-Mercapto-1-methylimidazol, 2-Mercapto-4-methylpyrimidin, 1-Mercapto-3-phenylpropan, 5-Mercapto-1-phenyl-1,2,3,4-tetrazol, 3-Mercapto-1,2-propendiol, 3-Mercaptopropionsäure, 2-Mercaptopropionsäuremethylester, 2-Mercaptopurin, 6-Mercaptopurin, 2-Mercapto-6,8-purindiol, 2-Mercaptopurin-6-ol, 6-Mercaptopurin-2-ol, 8-Mercaptopurin-6-ol, 2-Mercaptopyridin, 4-Mercapto-1H-pyrazolo(3,4-1) pyrimidin, 4-Mercaptopyridin, 2-Mercaptopyridin-N-oxid, Thiobarbitursäure, 1,2-Bis-(mercaptomethyl)-4,5-dimethyl-benzol.

Besonders bevorzugte Mercaptane der Formel B sind : 2-Mercaptoäthanol, DL-Mercaptobernsteinsäure, 2-Mercaptopropionsäure, Cystein, Bis-(2-mercaptoäthyl)-äther, Bis-(2-Mercaptoäthyl)-sulfid, Bismercaptothiadiazol, 2-Mercaptothiazolin und 1,2-Bismercaptoäthan sowie Triazole der folgenden Formel :

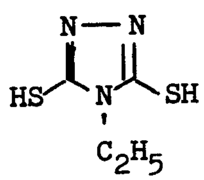 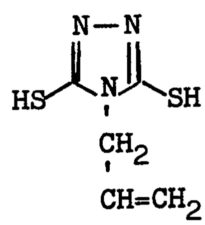 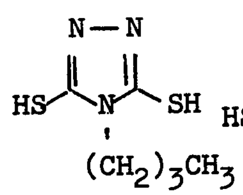 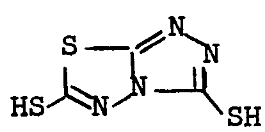

Unter Umständen kann es auch vorteilhaft sein, weitere weniger gut wasserlösliche polymerisierbare Monomere zur Erzielung bestimmter Effekte, wie Elastizität und Quellverhalten, in begrenzter Menge, z.B. bis zu 20 Mol-%, mit einzubauen. Als Beispiele hierfür seien Acrylnitril, Acrylsäureester und N-substituierte Acrylamide bzw. Methacrylamide genannt.

Das Molekulargewicht der erfindungsgemäßen verwendeten Copolymerisate liegt im allgemeinen im Bereich von etwa 5 000 bis 500 000.

Der Anteil der Verbindung B im Polymerisat aus den Verbindungen A und B liegt vorzugsweise zwischen 0,01 und 20 Gew.-%, vorzugsweise zwischen 0,1 und 10 Gew.-%, bezogen auf das Polymerisat.

Gegenstand der Erfindung ist weiterhin ein Verfahren zur Herstellung eines photographischen Materials mit wenigstens einer Silberhalogenidemulsion durch Fällen und physikalische Reifung des Silberhalogenids in Gegenwart eines Peptisationsmittels, worauf die Emulsion geflockt, gegebenenfalls gewaschen, redispergiert und chemisch gereift wird, dadurch gekennzeichnet, daß die Fällung des Silberhalogenids in Gegenwart des erfindungsgemäß zu verwendenden Polymerisats durchgeführt wird.

Die Herstellung der erfindungsgemäß zu verwendenden Polymeren kann nach verschiedenen

Methoden erfolgen. So lassen sich zur Herstellung der Polymeren die bekannten Polymerisationsinitiatoren wie z.B. Kaliumperoxodisulfat, Azobisisobutyronitril, Benzoeperoxid oder Redoxinitiatoren wie in IAN M. G. COWIE « Chemie und Physik der Polymeren », S. 52, Verlag Chemie Weinheim, New York 1976, beschrieben, verwenden. Die Polymerisation kann beispielsweise in Lösung, in Emulsion oder als Fällungspolymerisation durchgeführt werden. Für die Herstellung von photographischen Bindemitteln sind jedoch Lösungs- oder Fällungspolymerisationsverfahren am besten geeignet. Die Temperatur, bei der die Polymerisate der vorliegenden Erfindung hergestellt werden, kann in weitem Umfang variiert werden, da sie von verschiedenen Faktoren, wie beispielsweise dem jeweils verwendeten spezifischen Monomeren, der Reaktionsdauer und dem verwendeten Initiatorsystem, abhängt.

Die Polymerisationstemperatur übersteigt im allgemeinen nicht 110 °C und liegt in den meisten Fällen zwischen 20 und 80 °C. Die Polymerisation kann in einem geeigneten Medium, beispielsweise in Wasser oder in Mischungen von Wasser mit wassermischbaren Lösungsmitteln, z.B. Methanol, Äthanol, Propanol, Isopropanol oder Butylalkohol durchgeführt werden. Die Konzentration der polymerisierbaren Monomeren in der Polymerisationsmischung kann stark variiert werden, wobei mit Konzentrationen von etwa 5 bis 30 Gew.-%, bezogen auf die gesamte Polymerisationsmischung, zufriedenstellende Ergebnisse erhalten werden.

Eine weitere Methode zur Herstellung der erfindungsgemäßen Polymeren besteht darin, die Mercaptane in Kombination mit einem Oxidationsmittel als Redoxinitiatoren zu verwenden. Initiatorsysteme dieser Art sind in Makromol. Chem. 177 (1976) auf den Seiten 2 912 bis 2 926 und in J. Polym. Sci., Chem. Ed. 9 (1971) 253 beschrieben. Als Reduktionsmittel können die der Formel B entsprechenden Mercaptane verwendet werden. Als Oxidationsmittel sind beliebige Oxidantien einsetzbar, soweit sie mit Mercaptanen zu Thioradikalen reagieren, die die Polymerisation auslösen. Beispiele für verwendbare Oxidationsmittel sind Kaliumbromat, Kaliumperoxodisulfat, Wasserstoffperoxid, Kupfer-II-chlorid, Cer-IVsulfat und ähnliche Verbindungen. Selbstverständlich können die erfindungsgemäß zu verwendenden Polymeren gegebenenfalls weiter gereinigt werden. Zweckmäßig sind die dem Fachmann bekannten Reinigungsverfahren, wie das Umfällen, die Dialyse, Elektrodialyse oder Gelchromatographie. In einigen Fällen ist es sinnvoll, Restmengen an Mercaptogruppen, die teilweise in diesen Polymeren enthalten sind, durch chemische Reaktion umzuwandeln, um einen Schleier der Emulsionen, die mit dem erfindungsgemäß zu verwendenden Polymeren hergestellt werden, zu vermeiden. Als chemische Reaktion zur Umwandlung der Restmengen an Mercaptogruppen kommen in Frage :

Radikalische Additionen an ungesättigte Verbindungen, nucleofile Addition an ungesättigte Verbindungen und Homo- oder Heterocyclen, chemisch oder elektrochemisch durchgeführte Oxidationen oder andere Reaktionen, die zur Umwandlung der Mercaptogruppen führen.

Es folgen einige Herstellungsbeispiele für erfindungsgemäß zu verwendende Polymere :

### Polymer 1

Unter Stickstoff werden 142 g Acrylamid und 0,06 g 2-Mercaptoäthanol in 1 000 g Wasser gelöst und auf 35 °C erwärmt. Dazu werden 1,62 g Kaliumperoxodisulfat in 300 ml Wasser gelöst zugetropft, weitere 200 ml Wasser zugegeben und bei 35 °C 4 Studen gerührt. Anschließend wird in 5 l Aceton gefällt, abfiltriert, der Rückstand in 1 l Wasser gelöst und in 2,5 l Aceton gefällt.

### Polymer 2

Unter Stickstoff werden 142 g Acrylamid und 0,62 g Bismercaptoäthylsulfid in 1 000 g Wasser gelöst und aud 35 °C erwärmt. Dazu werden 16,2 g Kaliumperoxodisulfat in 300 ml Wasser gelöst zugetropft, weitere 200 ml Wasser zugegeben und bei 35 °C 4 Studen gerührt. Anschließend wird in 5 l Aceton gefällt, der Niederschlag abfiltriert, der Rückstand in 1 l Wasser gelöst und in 2,5 l Aceton gefällt.

### Polymer 3

Entsprechend der unter Polymer 2 angegebenen Verfahrensweise wird ein Copolymer hergestellt unter Verwendung von 142 g Acrylamid, 1,23 g Bismercaptoäthylsulfid und 32,4 g Kaliumperoxodisulfat.

### Polymer 4

Entsprechend der unter Polymer 2 angegebenen Verfahrensweise wird Copolymer hergestellt unter Verwendung von 142 g Acrylsäure, 2,5 g Bismercaptoäthylsulfid und 2,2 g Kaliumperoxodisulfat.

Polymer 5

Unter Stickstoff werden 71 g Acrylamid und 0,6 g 2,5-Dimercapto-1,3,4-thiadiazol in 350 ml Wasser gegeben und auf 35 °C erwärmt. Dann werden 16,2 g Kaliumperoxodisulfat, in 400 ml Wasser gelöst, innerhalb von 45 Minuten zugetropft. Man rührt weitere 3 Stunden bei 35 °C, tropft dann 1 l Aceton zu und trennt den anfallenden Niederschlag ab. Das ausgefallene Produkt wird mit 600 ml Wasser versetzt und die erhaltene trübe Lösung filtriert. Das Filtrat wird mit 1 l Aceton versetzt und das anfallende Polymerisat abgetrennt und mit Aceton gewaschen.

Die erfindungsgemäß anzuwendenden Polymere werden der photographischen Silberhalogenidemulsion vor der chemischen Reifung, vorzugsweise bereits bei der Fällung, zugesetzt. Die zugesetzte Menge hängt von dem gewünschten Effekt ab und kann mit wenigen einfachen Versuchen in üblicher Weise ermittelt werden.

Die erfindungsgemäß verwendeten Copolymerisate werden in Mengen eingesetzt, die eine Steigerung der Empfindlichkeit bewirken. Das als Schutzkolloid bei der Fällung des Silberhalogenids verwendete Peptisationsmittel kann beispielsweise zu 10 bis 100 Gewichts-% aus dem erfindungsgemäßen Polymer bestehen, wobei als restliches Peptisationsmittel Gelatine in Frage kommt. Pro Mol zu fällendes Silberhalogenid werden von den erfindungsgemäßen Polymeren im allgemeinen 500 mg bis 500 g, vorzugsweise 1 g bis 200 g, verwendet.

Die in der erfindungsgemäßen Weise zu verwendenden Substanzen vorzugsweise in Form ihrer wässrigen Lösung zugesetzt. Die Konzentration der Substanzen in dieser Lösung ist nicht kritisch und kann innerhalb weiter Grenzen schwanken. Die Polymeren müssen ausreichend wasserlöslich sein, um die Herstellung einer genügend konzentrierten wässrigen Lösung zu ermöglichen. Es genügt beispielsweise bereits, eine 1-5 %ige wässrige Lösung einzusetzen. Selbstverständlich kann bei besonders gut löslichen Substanzen die Lösung auch konzentrierter sein.

Im allgemeinen werden die Lösungen mit einem pH von etwa 7 hergestellt. Es ist jedoch auch möglich, den pH-Wert der Lösung schwach sauer zu halten, z.B. bei pH-Werten zwischen 5 und 7 oder bei sogenannten Ammoniakemulsionen können die pH-Werte der Lösung auch zwischen 5 und 9 liegen.

Die Polymerisate weisen als künstliche Produkte gleichbleibende Qualität auf. Überraschenderweise wird mit ihnen ein beträchtlicher Empfindlichkeitsgewinn erzielt, ohne daß dies mit einer wesentlichen Vergröberung des Silberhalogenidkornes einhergeht. Weitere Vorteile sind eine schnellere Anentwickelbarkeit der Silberhalogenidemulsionen und in einigen Fällen eine erhöhte Deckkraft des bei der Entwicklung gebildeten Silbers.

Die erfindungsgemäßen Substanzen können in beliebigen Silbersalz-, vorzugsweise Silberhalogenidemulsionen angewendet werden. Als Silberhalogenide sind Silberchlorid, Silberbromid oder Gemische davon, evtl. mit einem geringen Gehalt an Silberjodid bis zu 10 Mol-% geeignet. Die Silberhalogenide können in den üblichen hydrophilen Bindemitteln dispergiert sein, beispielsweise in Carboxymethylcellulose, Polyvinylalkohol, Polyvinylpyrrolidon, Alginsäure und deren Salzen, Estern oder Amiden oder Proteinen, vorzugsweise Gelatine.

Die erfindungsgemäß zu verwendenden Polymerisate können bei sämtlichen zur Herstellung photographischer Emulsionen üblichen Verfahren eingesetzt werden, beispielsweise bei Einstrahl-, Doppelstrahl- und Umlöseverfahren.

Die Emulsionen können auch andere chemische Sensibilisatoren enthalten, z.B. Quaternäre Ammonium- und Phosphonium- sowie ternäre Sulfoniumsalze, Reduktionsmittel wie Zinn-II-Salze, Polyamine wie Diäthylentriamin oder Schwefelverbindungen, wie in der amerikanischen Patentschrift 1,574,944 beschrieben. Zur chemischen Sensibilisierung können die angegebenen Emulsionen ferner Salze von Edelmetallen, wie Ruthenium, Rhodium, Palladium, Iridium, Platin oder Gold enthalten, wie dies in dem Artikel von R. KOSLOWSKY, Z. Wiss. Phot. 46, 65-72 (1951) beschrieben worden ist. Weiterhin können die Emulsionen auch Polyalkylenoxide oder Polyalkylenoxid-derivate als Entwicklungsbeschleuniger oder chemische Sensibilisatoren enthalten. Dabei wird ein zusätzlicher Empfindlichkeitsgewinn erzielt.

Die Emulsionen können spektral sensibilisiert sein z.B. durch die üblichen Mono- oder Polymethinfarbstoffe, wie saure oder basische Cyanine, Hemicyanine, Streptocyanine, Merocyanine, Oxonole, Hemioxonole, Styrylfarbstoffe oder andere, auch drei- oder mehrkernige Methinfarbstoffe, beispielsweise Rhodacyanine oder Neocyanine. Derartige Sensibilisatoren sind beispielsweise beschrieben in dem Werk von F. M. Hamer « The Cyanine Dyes and Related Compounds », (1964) Interscience Publishers John Wiley and Sons.

Die Emulsionen können die üblichen Stabilisatoren enthalten, wie z.B. homöopolare oder salzartige Verbindungen des Quecksilbers mit aromatischen oder heterocyclischen Ringen (etwa Mercaptotriazolen), einfache Quecksilbersalze, Sulfoniumquecksilverdoppelsalze und andere Quecksilberverbindungen. Als Stabilisatoren sind weiterhin geeignet Azaindene, vorzugsweise Tetra- oder Pentaazaindene, insbesondere solche, die mit Hydroxyl- oder Aminogruppen substituiert sind.

Derartige Verbindungen sind in dem Artikel von BIRR, Z. Wiss. Phot. 47, 2-58 (1952) beschrieben. Weitere geeignete Stabilisatoren sind u.a. heterocyclische Mercaptoverbindungen, z.B. Phenylmercaptotetrazol, quaternäre Benzthiazolderivate und Benztriazol.

Die Emulsionen können in der üblichen Weise gehärtet sein, beispielsweise mit Formaldehyd oder

halogensubstituierten Aldehyden, die eine Carboxylgruppe enthalten, wie Mucobromsäure mit Diketonen, Methansulfonsäureester, Dialdehyden oder polyfunktionellen Triazinderivaten wie Trisacryloylhexahydrotriazin oder Halogen- bzw. Alkoxy-substituierten Hexahydrotriazinderivaten.

Die erfindungsgemäßen Substanzen besitzen ihre vorteilhafte Wirkung nicht nur in Schwarz-Weiß-Emulsionen, sondern sie zeigen ihre Effekte auch bei der Herstellung farbphotographischer Bilder. Sie besitzen eine gute Verträglichkeit mit den üblichen Farbkupplern. Ebenso können die Polymere auch bei Direktpositivemulsionen, z.B. solchen mit geschichtetem Kornaufbau gemäß gemäß französischer Patentschrift 1,585,791 eingesetzt werden. Sie sind ferner geeignet für Emulsionen für das Silberfarbbleichverfahren oder Farbstoffdiffusionsverfahren.

Eine besonders gute Wirkung wird mit den Polymeren bei solchen Silberhalogenidemulsionen erzielt, die in Gegenwart von Kieselsolen gefällt werden. Die Herstellung solcher Emulsionen ist in DT-OS 1 797 254 und 3 637 391 beschrieben.

Gemäß einer weiteren bevorzugten Ausführungsform werden die Polymere in Kombination mit Polymeren verwendet, die Disulfonimidgruppen enthalten. Solche Verbindungen sind in DT-PS 1 089 548 und US 3,052,656 beschrieben. Die polymeren Disulfonimide werden vor der chemischen Reifung, insbesondere bei der Fällung der Flockung zugesetzt. Die Konzentration der Disulfonimide kann innerhalb weiter Grenzen schwanken. Im allgemeinen haben sich Mengen von 1 bis 10 %, bezogen auf das gesamte Peptisationsmittel während der Fällung als ausreichend erwiesen.

## Beispiel 1

### Probe 1

Zur Herstellung einer Silberbromidjodidgelatine-Emulsion werden folgende Lösungen bereitet:

| | | | |
|---|---|---|---|
| Lösung A) | 1 000 ml | Wasser | |
| | 10 g | Gelatine | |
| | 30 g | KBr | |
| | 2 g | KJ | Temperatur 50 °C |
| Lösung B) | 1 000 ml | Wasser | Temperatur 45 °C |
| | 40 g | $AgNO_3$ | |

Man gießt Lösung B innerhalb 5 Minuten gleichmäßig in Lösung A, digeriert anschließend 30 Minuten bei 50 °C und kühlt dann auf 20 °C ab, gibt 10 ml einer 10-%igen wässrigen Polystyrolsulfonsäurelösung dazu und erniedrigt mit Schwefelsäure (25 %) den pH auf 3,0, wodurch die Emulsion ausflockt.

Man läßt absitzen und gießt die überstehende Lösung ab. Zur chemischen Reifung wird das Flockulat in 2 000 ml einer 10 %igen wäßrigen Gelatinelösung (pH 7,5) bei 40 °C gelöst.

Nach Auflösen des Flockulates wird auf pH 6,5 eingestellt und eine entsprechende Menge an Schwefelreifer und Goldsalzen hinzugefügt und bei 55 °C bis auf volle Empfindlichkeit gereift. Die Emulsion wird pro kg mit 10 ml einer 5 %igen wäßrigen Lösung von Saponin (Netzmittel), 10 ml einer 10 %igen wäßrigen Lösung von Formaldehyd (Härtungsmittel) und 20 ml einer 1 %igen methanolischen Lösung von 4-Hydroxy-6-methyl-1,3,3a,7-Tetraazainden (Stabilisator) versetzt und auf einen Celluloseacetatschichtträger vergossen. Nach Belichtung in einem üblichen Sensitometer hinter einem Stufenkeil und Entwicklung (7 und 16 Minuten bei 20 °C) in einem Entwickler folgender Zusammensetzung.

| | |
|---|---|
| Natriumsulfit sicc. | 70,0 g |
| Borax | 7,0 g |
| Hydrochinon | 3,5 g |
| p-Monomethylaminophenol-Sulfat | 3,5 g |
| Natriumcitrat | 7,0 g |
| Kaliumbromid | 0,4 g |
| mit Wasser auf 1 Liter auffüllen | |

wird sensitometrisch ausgewertet.

### Proben 2 - 5

Die Emulsionsherstellung und Auswertung erfolgt jeweils in der gleichen Weise, wobei jedoch in der Lösung A Gelatine der Reihe nach durch die gleiche Gewichtsmenge eines der zuvor beschriebenen Polymere 1-5 ersetzt wurde.

Aus der folgenden Tabelle 1 ist ersichtlich, daß die Emulsionen 2 bis 6 (mit den Polymeren 1 bis 5) eine höhere Empfindlichkeit haben als die Vergleichsemulsion.

| | | 7'Entwicklung | | | 16'Entwicklung | | |
|---|---|---|---|---|---|---|---|
| Vers. Nr. | Schutz-Kolloid | E | γ | Schl. | E | γ | Schl. |
| 1 | Gelatine | 100 | 0,90 | 0.13 | 300 | 0,95 | 0,23 |
| 2 | Polymer 1 | 600 | 1,45 | 0,11 | 800 | 1,80 | 0,24 |
| 3 | Polymer 2 | 400 | 0,95 | 0,11 | 600 | 1,15 | 0,20 |
| 4 | Polymer 3 | 500 | 0,75 | 0,06 | 650 | 0,95 | 0,08 |
| 5 | Polymer 4 | 150 | 1,76 | 0,15 | 300 | 1,70 | 0,18 |
| 6 | Polymer 5 | 320 | 0,88 | 0,04 | 320 | 1,08 | 0,05 |

**Ansprüche**

1. Lichtempfindliches photographisches Material mit wenigstens einer Silberhalogenidemulsionsschicht, die eine schwefelhaltige polymere Verbindung enthält, dadurch gekennzeichnet, daß die Silberhalogenidemulsionsschicht eine polymere Verbindung enthält, die durch Polymerisation einer Verbindung A in Gegenwart einer Verbindung B hergestellt worden ist, wobei A und B folgenden Formeln entsprechen :

A :

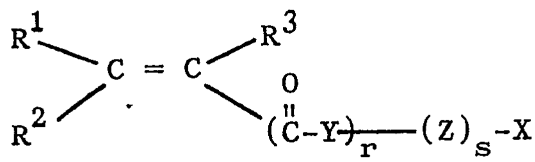

B : $H-S_n-(Q^1-W)_m-Q^2-S-H$

worin bedeuten :

| | |
|---|---|
| $R^1$, $R^2$, $R^3$ | gleich oder verschieden ; Wasserstoff, gegebenenfalls substituiertes Alkyl oder Aryl ; |
| Y | Sauerstoff oder $-NR^4-$ ; |
| $R^4$ | Wasserstoff, Alkyl |
| Z | gegebenenfalls substituiertes Alkylen oder ein gegebenenfalls substituiertes Arylen ; |
| X | $NR^1R^2$, H, OH, $SO_3H$, $PO_3H$, COOH oder ein Heterocyclus ; |
| $Q^1$, $Q^2$ | gleich oder verschieden, eine gegebenenfalls substituierte Alkylen- oder Arylengruppe oder einen heterocyclischen Rest ; |
| W | Sauerstoff oder Schwefel ; |
| n, m, r, s | gleich oder verschieden, 0 oder 1. |

2. Lichtempfindliches photographisches Material mit wenigstens einer Silberhalogenidemulsionsschicht, die eine schwefelhaltige polymere Verbindung enthält, dadurch gekennzeichnet, daß die Silberhalogenidemulsionsschicht eine polymere Verbindung enthält, die durch Polymerisation einer Verbindung A in Gegenwart einer Verbindung B hergestellt worden ist, wobei A und B folgenden Formeln entsprechen :

A :

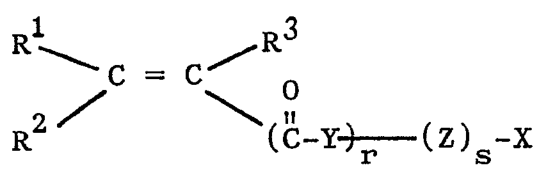

B : $H-S_n-(Q^1-W)_m-Q^2-S-H$

worin bedeuten :

| | |
|---|---|
| $R^1$, $R^2$ | Wasserstoff ; |
| $R^3$ | Wasserstoff oder Methyl ; |

| | |
|---|---|
| Y | Sauerstoff oder $-NR^4-$; |
| $R^4$ | Wasserstoff, Alkyl |
| Z | gegebenenfalls substituiertes Alkylen oder ein gegebenenfalls substituiertes Arylen; |
| X | $SO_3H$, COOH, $CONH_2$, einen N-haltigen Heterocyclus oder Wasserstoff, wenn s = 0. |
| $Q^1$, $Q^2$ | gleich oder verschieden, eine gegebenenfalls substituierte Alkylen- oder Arylengruppe oder einen heterocyclischen Rest; |
| W | Sauerstoff oder Schwefel; |
| n, m, r, s | gleich oder verschieden, 0 oder 1. |

3. Photographisches Material nach Anspruch 1, dadurch gekennzeichnet, daß die Silberhalogenidemulsionsschicht eine polymere Verbindung der in Anspruch 1 angegebenen Formeln enthält, wobei B den Formeln 1) und 3) oder der Struktur 2) entspricht:

1) $$HS-R^5-X$$

2)

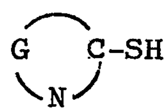

3) $$HS-(Q^1-W)_m-Q^2-SH$$

worin bedeuten:

| | |
|---|---|
| $R^5$ | gegebenenfalls substituiertes Alkylen oder Phenylen; |
| G | die zur Vervollständigung eines 5- oder 6-gliedrigen Ringes erforderlichen Glieder, die einen ankondensierten aromatischen Ring tragen können; |
| $Q^1$ und $Q^2$ | Alkylen, wenn m = 1; |
| $Q^2$ | Alkylen oder ein Heterocyclus, wenn m = 0 |

und worin X, W und m die in Anspruch 1 angegebene Bedeutung haben.

4. Photographisches Material nach Anspruch 1, dadurch gekennzeichnet, daß $Q^1$ und/oder $Q^2$ Äthylen bedeuten.

5. Photographisches Material nach Anspruch 1, dadurch gekennzeichnet, daß der Anteil der Polymerisierten Verbindung B in der polymeren Verbindung 0,01 bis 20 Gew.-% beträgt.

6. Photographisches Material nach Anspruch 1, dadurch gekennzeichnet, daß die polymere Verbindung in einer Menge von 500 mg bis 500 g pro Mol Silberhalogenid enthalten ist.

7. Photographisches Material nach Anspruch 1, dadurch gekennzeichnet, daß die polymere Verbindung aufgebaut ist aus Einheiten aus Acrylsäure und Mercaptoäthanol und/oder Acrylamid und Bismercaptoäthylsulfid.

8. Photographisches Material nach Anspruch 1, dadurch gekennzeichnet, daß die polymere Verbindung wasserlöslich ist.

9. Photographisches Material nach Anspruch 1, dadurch gekennzeichnet, daß die polymere Verbindung unter Verwendung eines Polymerisationsinitiators hergestellt wurde.

10. Verfahren zur Herstellung eines lichtempfindlichen photographischen Materials mit wenigstens einer Silberhalogenidemulsionsschicht, die eine schwefelhaltige Verbindung enthält, durch Fällen und physikalische Reifung des Silberhalogenids in Gegenwart eines Peptisationsmittels, dadurch gekennzeichnet, daß die Fällung des Silberhalogenids in Gegenwart einer polymeren Verbindung erfolgt, die durch Polymerisation einer Verbindung A in Gegenwart einer Verbindung B hergestellt worden ist, wobei A und B folgender Formel entsprechen:

A:

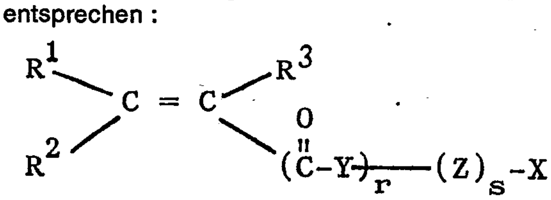

B: $$H-S_n-(Q^1-W)_m-Q^2-S-H$$

worin bedeuten:

| | |
|---|---|
| $R^1$, $R^2$, $R^3$ | gleich oder verschieden; Wasserstoff, gegebenenfalls substituiertes Alkyl oder Aryl; |
| Y | Sauerstoff oder $-NR^4-$; |
| $R^4$ | Wasserstoff, Alkyl |

| | |
|---|---|
| Z | gegebenenfalls substituiertes Alkylen oder ein gegebenenfalls substituiertes Arylen ; |
| X | $NR^1R^2$, H, OH, $SO_3H$, $PO_3H$, COOH oder ein Heterocyclus ; |
| $Q^1$, $Q^2$ | gleich oder verschieden, eine gegebenenfalls substituierte Alkylen- oder Arylengruppe oder einen heterocyclischen Rest ; |
| W | Sauerstoff oder Schwefel ; |
| n, m, r, s | gleich oder verschieden, 0 oder 1. |

**Claims**

1. A light-sensitive photographic material having at least one silver halide emulsion layer which contains a sulphur-containing polymeric compound, characterised in that the silver halide emulsion layer contains a polymeric compound which has been prepared by polymerising a compound A in the presence of a compound B, A and B corresponding to the following formulae :

A :

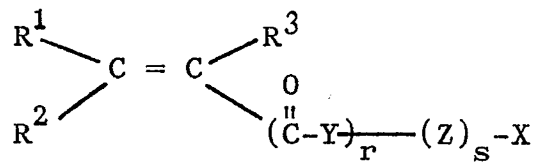

B :

$$H{-}S_n{-}(Q^1{-}W)_m{-}Q^2{-}S{-}H$$

in which

| | |
|---|---|
| $R^1$, $R^2$ and $R^3$ | are identical or different ; and represent hydrogen, optionally substituted alkyl or aryl ; |
| Y | represents oxygen or $—NR^4—$ ; |
| $R^4$ | represents hydrogen or alkyl ; |
| Z | represents optionally substituted alkylene or an optionally substituted arylene ; |
| X | represents $NR^1R^2$, H, OH, $SO_3H$, $PO_3H$, COOH or a heterocyclic group ; |
| $Q^1$ and $Q^2$ | are identical or different and represent an optionally substituted alkylene or arylene group or a heterocyclic group ; |
| W | represents oxygen or sulphur ; and |
| n, m, r and s | are identical or different and represent 0 or 1. |

2. A light-sensitive photographic material having at least one silver halide emulsion layer containing a sulphur-containing polymeric compound, characterised in that the silver halide emulsion layer contains a polymeric compound which has been prepared by polymerisation of a compound A in the presence of a compound B, compounds A and B corresponding to the following formulae :

A :

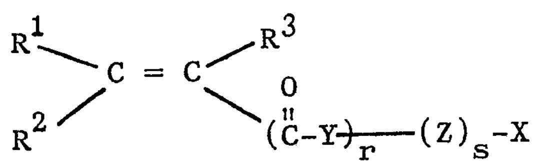

B :

$$H{-}S_n{-}(Q^1{-}W)_m{-}Q^2{-}S{-}H$$

in which

| | |
|---|---|
| $R^1$ and $R^2$ | represent hydrogen ; |
| $R^3$ | represents hydrogen or methyl ; |
| Y | represents oxygen or $—NR^4—$ ; |
| $R^4$ | represents hydrogen or alkyl ; |
| Z | represents optionally substituted alkylene or an optionally substituted arylene ; |
| X | represents $SO_3H$, COOH, $CONH_2$, an N-containing heterocyclic group or hydrogen when $s = 0$. |
| $Q^1$ and $Q^2$ | are identical or different and represent an optionally substituted alkylene or arylene group or a heterocyclic group ; |
| W | represents oxygen or sulphur |
| n, m, r and s | are identical or different and represent 0 or 1. |

3. A photographic material according to claim 1, characterised in that the silver halide emulsion layer contains a polymeric compound of the formulae given in claim 1, B corresponding to the formulae 1) and 3) or the structure 2)

1) $$HS—R^5—X$$

2)

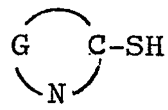

3)

$$HS-(Q^1-W)_m-Q^2-SH$$

in which

$R^5$ represents optionally substituted alkylene or phenylene ;

G represents the members required to complete a 5- or 6-membered ring, which may carry a condensed aromatic ring ;

represent alkylene when m = 1 ;

$Q^2$ represents alkylene or a heterocyclic group when m = 0

and in which X, W and m have the meaning given in claim 1.

4. A photographic material according to claim 1, characterised in that $Q^1$ and/or $Q^2$ represent ethylene.

5. A photographic material according to claim 1, characterised in that the proportion of the polymerised compound B in the polymeric compound is from 0.01 to 20 % by weight.

6. A photographic material according to claim 1, characterised in that it contains from 500 mg to 500 g of the polymeric compound per mol of silver halide.

7. A photographic material according to claim 1, characterised in that the polymeric compound is built up of units of acrylic acid and mercapto ethanol and/or acrylamide and bismercapto ethyl sulphide.

8. A photographic material according to claim 1, characterised in that the polymeric compound is water-soluble.

9. A photographic material according to claim 1, characterised in that the polymeric compound has been prepared using a polymerisation initiator.

10. A process for preparing a light-sensitive photographic material having at least one silver halide emulsion layer which contains a sulphur-containing compound, by precipitation and physical ripening of the silver halide in the presence of a peptisation agent, characterised in that the precipitation of the silver halide takes place in the presence of a polymeric compound which has been prepared by polymerisation of a compound A in the presence of a compound B, A and B corresponding to the following formula :

A :

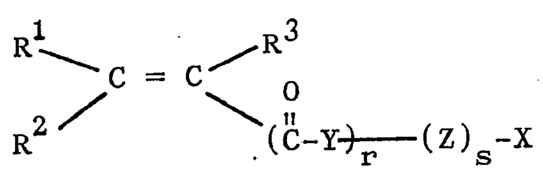

B :

$$H-S_n-(Q^1-W)_m-Q^2-S-H$$

in which

$R^1$, $R^2$ and $R^3$ are identical or different ; and represent hydrogen, optionally substituted alkyl or aryl ;

Y represents oxygen or $—NR^4—$ ;

$R^4$ represents hydrogen or alkyl

Z represents optionally substituted alkylene or an optionally substituted arylene ;

X represents $NR^1R^2$, H, OH, $SO_3H$, $PO_3H$, COOH or a heterocyclic group ;

$Q^1$ and $Q^2$ are identical or different and represent an optionally substituted alkylene or arylene group or a heterocyclic group ;

W represents oxygen or sulphur ;

n, m, r and s are identical or different and represent 0 or 1.

## Revendications

1. Elément photographique photosensible comportant au moins une couche d'émulsion à l'halogénure d'argent contenant un composé polymère sulfuré, caractérisé en ce que la couche d'émulsion à l'halogénure d'argent contient un composé polymère que l'on prépare par polymérisation d'un composé

A en présence d'un composé B, les composés A et B répondant aux formules suivantes :

A :

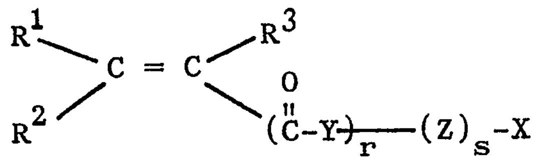

B : $H-S_n-(Q^1-W)_m-Q^2-S-H$

dans lesquelles :

| | |
|---|---|
| $R^1$, $R^2$ et $R^3$ | sont identiques ou différents et représentent chacun un atome d'hydrogène, un groupe aryle ou un groupe alkyle éventuellement substitué ; |
| Y | représente un atome d'oxygène ou un groupe —$NR^4$— ; |
| $R^4$ | représente un atome d'hydrogène ou un groupe alkyle ; |
| Z | représente un groupe alkylène éventuellement substitué ou un groupe arylène éventuellement substitué ; |
| X | représente $NR^1R^2$, H, OH, $SO_3H$, $PO_3H$, COOH ou un hétérocycle ; |
| $Q^1$ et $Q^2$ | sont identiques ou différents et représentent chacun un groupe arylène ou un groupe alkylène éventuellement substitué, ou encore un radical hétérocyclique ; |
| W | représente un atome d'oxygène ou de soufre ; |
| n, m, r et s | sont identiques ou différents et représentent chacun 0 ou 1. |

2. Elément photographique photosensible comportant au moins une couche d'émulsion à l'halogénure d'argent contenant un composé polymère sulfuré, caractérisé en ce que la couche d'émulsion à l'halogénure d'argent contient un composé polymère que l'on prépare par polymérisation d'un composé A en présence d'un composé B, les composés A et B répondant aux formules suivantes :

A :

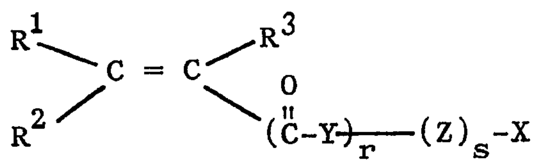

B : $H-S_n-(Q^1-W)_m-Q^2-S-H$

dans lesquelles :

| | |
|---|---|
| $R^1$ et $R^2$ | représentent chacun un atome d'hydrogène ; |
| $R^3$ | représente un atome d'hydrogène ou un groupe méthyle ; |
| Y | représente un atome d'oxygène ou un groupe —$NR^4$— ; |
| $R^4$ | représente un atome d'hydrogène ou un groupe alkyle ; |
| Z | représente un groupe alkylène éventuellement substitué ou un groupe arylène éventuellement substitué ; |
| X | représente $SO_3H$, COOH, $CONH_2$, un hétérocycle azoté ou un atome d'hydrogène lorsque s = 0 ; |
| $Q^1$ et $Q^2$ | sont identiques ou différents et représentent chacun un groupe arylène ou un groupe alkylène éventuellement substitué, ou encore un radical hétérocyclique ; |
| W | représente un atome d'oxygène ou de soufre ; |
| n, m, r et s | sont identiques ou différents et représentent chacun 0 ou 1. |

3. Elément photographique suivant la revendication 1, caractérisé en ce que la couche d'émulsion à l'halogénure d'argent contient un composé polymère répondant aux formules indiquées dans la revendication 1, le composé B répondant aux formules 1) et 3) ou ayant la structure 2) :

1) $HS—R^5—X$

2)

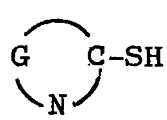

3)

$$HS-(Q^1-W)_m-Q^2-SH$$

où

| | |
|---|---|
| $R^5$ | représente un groupe phénylène ou un groupe alkylène éventuellement substitué ; |
| G | représente les termes nécessaires pour compléter un noyau pentagonal ou hexagonal et pouvant comporter un noyau aromatique condensé ; |
| $Q^1$ et $Q^2$ | représentent chacun un groupe alkylène lorsque m = 1 ; |
| $Q^2$ | représente un groupe alkylène ou un hétérocycle lorsque m = 0, |

tandis que X, W et m ont les significations indiquées dans la revendication 1.

4. Elément photographique suivant la revendication 1, caractérisé en ce que $Q^1$ et/ou $Q^2$ représentent chacun un groupe éthylène.

5. Elément photographique suivant la revendication 1, caractérisé en ce que la proportion du composé polymérisé B dans le composé polymère est de 0,01 à 20 % en poids.

6. Elément photographique suivant la revendication 1, caractérisé en ce que le composé polymère est contenu en une quantité de 500 mg à 500 g par mole d'halogénure d'argent.

7. Elément photographique suivant la revendication 1, caractérisé en ce que le composé polymère est constitué de motifs d'acide acrylique et de mercapto-éthanol et/ou d'acrylamide et de sulfure de bismercaptoéthyle.

8. Elément photographique suivant la revendication 1, caractérisé en ce que le composé polymère est hydrosoluble.

9. Elément photographique suivant la revendication 1, caractérisé en ce que le composé polymère a été préparé en utilisant un initiateur de polymérisation.

10. Procédé de fabrication d'un élément photographique photosensible comportant au moins une couche d'émulsion à l'halogénure d'argent contenant un composé sulfuré, par précipitation et maturation physique de l'halogénure d'argent en présence d'un agent de peptisation, caractérisé en ce qu'on effectue la précipitation de l'halogénure d'argent en présence d'un composé polymère que l'on prépare par polymérisation d'un composé A en présence d'un composé B, les composés A et B répondant aux formules suivantes :

A :

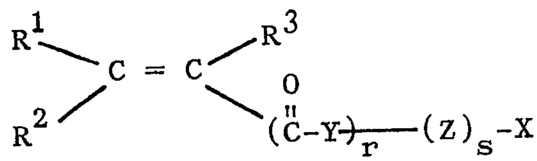

B :

$$H-S_n-(Q^1-W)_m-Q^2-S-H$$

dans lesquelles :

| | |
|---|---|
| $R^1$, $R^2$ et $R^3$ | sont identiques ou différents et représentent chacun un atome d'hydrogène, un groupe aryle ou un groupe alkyle éventuellement substitué ; |
| Y | représente un atome d'oxygène ou un groupe $—NR^4—$ ; |
| $R^4$ | représente un atome d'hydrogène ou un groupe alkyle ; |
| Z | représente un groupe alkylène éventuellement substitué ou un groupe arylène éventuellement substitué ; |
| X | représente $NR^1R^2$, H, OH, $SO_3H$, $PO_3H$, COOH ou un hétérocycle ; |
| $Q^1$ et $Q^2$ | sont identiques ou différents et représentent chacun un groupe arylène ou un groupe alkylène éventuellement substitué, ou encore un radical hétérocyclique ; |
| W | représente un atome d'oxygène ou de soufre ; |
| n, m, r et s | sont identiques ou différents et représentent chacun 0 ou 1. |